# EUROPÄISCHE PATENTANMELDUNG

(11) **EP 1 598 525 A1**
(43) Veröffentlichungstag der Anmeldung: **23.11.2005**
(21) Anmeldenummer: 04011646.9
(22) Anmeldetag: 17.05.2004
(51) Int. Cl.: F01D 25/28, F01D 25/24, F02C 7/20

(54) **Turboladerstütze**

(71) Anmelder: ABB Turbo Systems AG, 5400 Baden (CH)
(72) Erfinder: Bättig, Josef, 5704 Egliswil (CH); Meier, Marcel, 5417 Untersiggenthal (CH); Werro, Jean-Yves, 5415 Rieden (CH); Wellenkamp, Ulrich, 5210 Windisch (CH)
(74) Vertreter: ABB Patent Attorneys

(57) **Zusammenfassung**

Der Abgasturbolader mit dem Verdichter- (1), Turbinen- (2) und Lagergehäuse (3), ist im Bereich des Lagergehäuses mittels einer ersten Stütze (31) und im Bereich des Turbinengehäuses mittels einer zweiten Stütze (4) auf einem Untergrund (5) abgestützt. Die zweite Stütze ist zumindest zweiteilig ausgebildet, wobei die beiden Teile in Stützrichtung relativ zueinander bewegbar sind.

Dadurch lässt sich die Länge der Stütze variieren und ein temperaturbedingtes Anheben oder Senken des Abgasturboladergehäuses ausgleichen.

## Beschreibung

### Technisches Gebiet

Die Erfindung bezieht sich auf das Gebiet der Abgasturbolader. Sie betrifft eine Stütze zum Abstützen eines Abgasturboladers an einem Untergrund.

### Stand der Technik

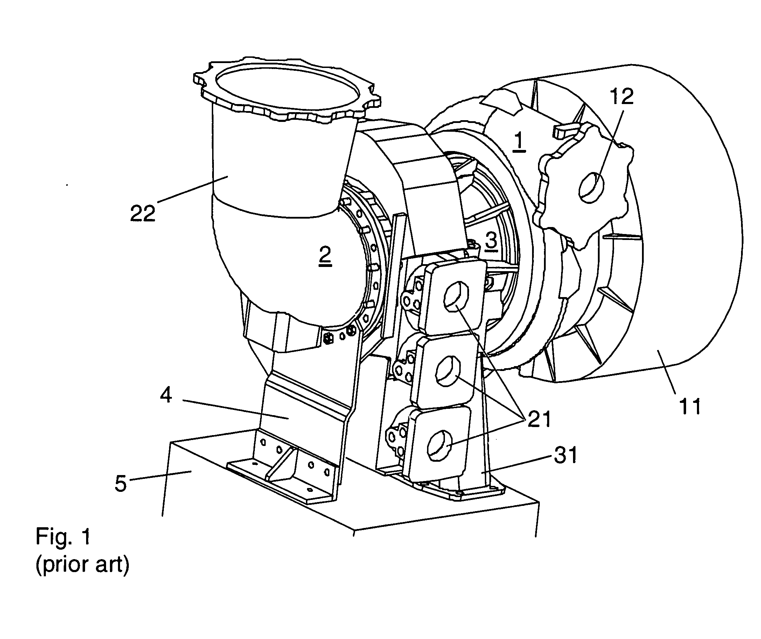

Abgasturbolader werden zur Leistungssteigerung von Brennstoffmotoren eingesetzt. Bei Abgasturboladern mit Radialturbinen ist das Lagergehäuse bedingt durch die kompakte Bauweise axial sehr gedrungen. Die Befestigung solcher Abgasturbolader an dem Untergrund bzw. an dem Gehäuse des Brennstoffmotors erfolgt in der Regel beim Lagergehäuse, wobei, wie in Fig. 1 dargestellt, aus Steifigkeitsgründen meist eine zusätzliche Stütze auf der Heissgasseite eingesetzt wird. Eine solche Befestigung ist aus dem Stand der Technik bekannt und beispielsweise in EP 1 331 365 dargestellt und beschrieben. Durch die zusätzliche Abstützung mittels der sogenannten Pendelstütze soll verhindert werden, dass der Abgasturbolader durch die Motorschwingungen zu Eigenfrequenzschwingungen angeregt wird.

Da die Temperaturen des Abgasturboladergehäuses im Bereich der Pendelstützenbefestigung wesentlich über denen im Bereich des Lagergehäusefusses liegen, wird der Abgasturbolader auf seiner Heissgasseite angehoben. Dadurch erfährt das Turbinengehäuse beträchtliche Querkräfte, welche zu Gehäusedeformationen und somit zu Spielverkleinerungen im Bereich des Turbinenrades führen. Im Extremfall kann es zum Anstreifen des Laufrades am Gehäuse führen.

Die Aufgabe der zwei Stützen besteht somit neben der Abstützung und Fixierung des Abgasturboladers gegenüber dem Untergrund sowie der Aufnahme von Schwingungen des Abgasturboladers, so dass diese nicht voll auf den Untergrund übertragen werden, zusätzlich auch aus dem Ausgleich von thermisch bedingten Ausdehnungen des Abgasturboladergehäuses.

### Kurze Darstellung der Erfindung

Der Erfindung liegt die Aufgabe zugrunde, eine Stütze zum Abstützen eines Abgasturboladers auf einem Untergrund zu schaffen, mit welcher das Gehäuse des Abgasturboladers auch bei sehr grossen Temperaturschwankungen ohne Gehäusedeformationen gestützt werden kann.

Erfindungsgemäss wird diese Aufgabe mit einer Stütze mit den Merkmalen des Patentanspruchs 1 gelöst.

Die erfindungsgemässe Stütze ist zumindest zweiteilig ausgebildet, wobei die beiden Teile in Stützrichtung relativ zueinander bewegbar sind. Dadurch lässt sich die Länge der Stütze variieren und ein temperaturbedingtes Anheben oder Senken des Abgasturboladergehäuses ausgleichen.

Weitere Vorteile ergeben sich aus den abhängigen Ansprüchen.

### Kurze Beschreibung der Zeichnungen

Im folgenden sind anhand der Figuren mehrere Ausführungsformen der erfindungsgemässen Stütze schematisch dargestellt und näher erläutert.

In allen Figuren sind gleichwirkende Elemente mit gleichen Bezugszeichen versehen.

Es zeigen:
- Fig. 1: eine Schrägansicht eines Abgasturboladers mit einer Pendelstütze gemäss dem Stand der Technik,
- Fig. 2: eine Seitenansicht eines Abgasturboladers mit einer erfindungsgemässen, mehrteiligen Pendelstütze,
- Fig. 3: schematische Detailzeichnungen der erfindungsgemässen, zweiteiligen Pendelstütze,
- Fig. 4: eine vergrösserte Schrägansicht der erfindungsgemässen Pendelstütze gemäss Fig. 2, und
- Figs. 5 bis 9: Schnittdarstellungen durch verschiedene, beispielhafte Ausführungsformen der erfindungsgemässen, mehrteiligen Pendelstütze, wobei die Teile der Pendelstütze jeweils auf unterschiedliche Art miteinander verbunden sind.

### Weg zur Ausführung der Erfindung

Fig. 1 zeigt einen Abgasturbolader mit den wesentlichen Gehäuseteilen, dem Verdichtergehäuse 1, dem Turbinengehäuse 2 sowie dem dazwischenliegenden Lagergehäuse 3. Im Innern des Gehäuses und daher in der Darstellung nicht sichtbar befinden sich Turbinen- und Verdichterrad sowie die Lagerung der Welle, welche die beiden Räder miteinander verbindendet. Die zu verdichtende Luft für den Brennstoffmotor wird über das Luftansauggehäuse 11 angesaugt. Das Luftansauggehäuse ist entweder ein Luftansaugstutzen oder, wie in dem dargestellten Fall, ein Filterschalldämpfer. Die verdichtete Luft verlässt den Abgasturbolader durch die Luftaustrittsöffnung 12 und wird den Zylindern des Motors zugeführt. Nach der Verbrennung im Motor treten die heissen Abgase über die Abgaseintrittsöffnungen wieder in den Abgasturbolader ein, wo sie zum Antreiben des Verdichterrades über die Turbine geführt werden. Über den Abgasaustritt 22 werden die Abgase schliesslich aus dem Abgasturbolader in die Auspuffanlagen geführt.

Das Gehäuse ist mittels zweier Stützen an dem Untergrund 5, beispielsweise dem Gehäuse des mit dem Abgasturbolader verbundenen Verbrennungsmotors oder einem tragfähigen Fundament, befestigt. Die erste Stütze ist der das Hauptgewicht des Abgasturboladers tragende Lagergehäusefuss 31. Der Lagergehäusefuss stützt den Abgasturbolader in dessen Schwerpunkt, welcher irgendwo zwischen Lagergehäuse und Turbinengehäuse zu finden sein dürfte. Daneben ist die an sich aus dem Stand der Technik bekannte Pendelstütze 4 angeordnet, welcher, wie eingangs erwähnt, im wesentlichen schwingungstechnische Aufgaben zukommen. Die Pendelstütze ist mittels Schrauben oder anderer Befestigungsmittel am Turbinengehäuse befestigt und über eine Untergrundbefestigung 51 fest mit dem Untergrund verbunden. Die zusätzliche Untergrundbefestigung erleichtert die Montage/ Demontage des Abgasturboladers, wobei anstelle einer separaten Untergrundbefestigung auch die Pendelstütze entsprechende Mittel zum Verankern im Untergrund umfassen kann.

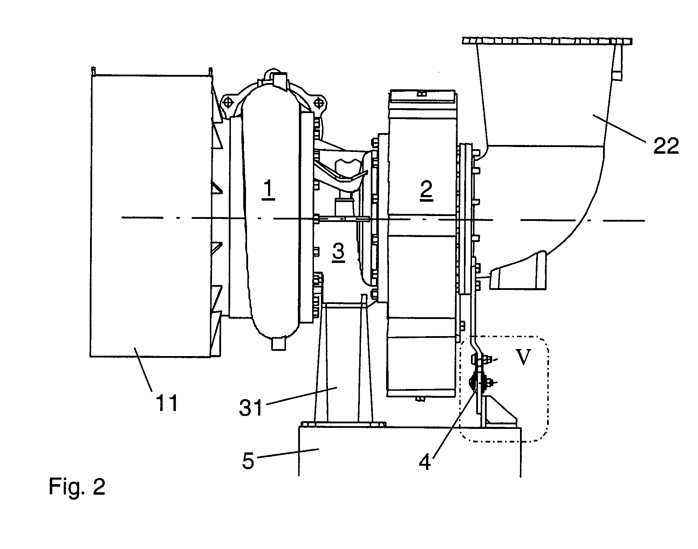

Fig. 2 zeigt denselben Abgasturbolader von der Seite, wobei die aus dem Stand der Technik bekannte Pendelstütze durch eine erfindungsgemässe Pendelstütze ersetzt ist.

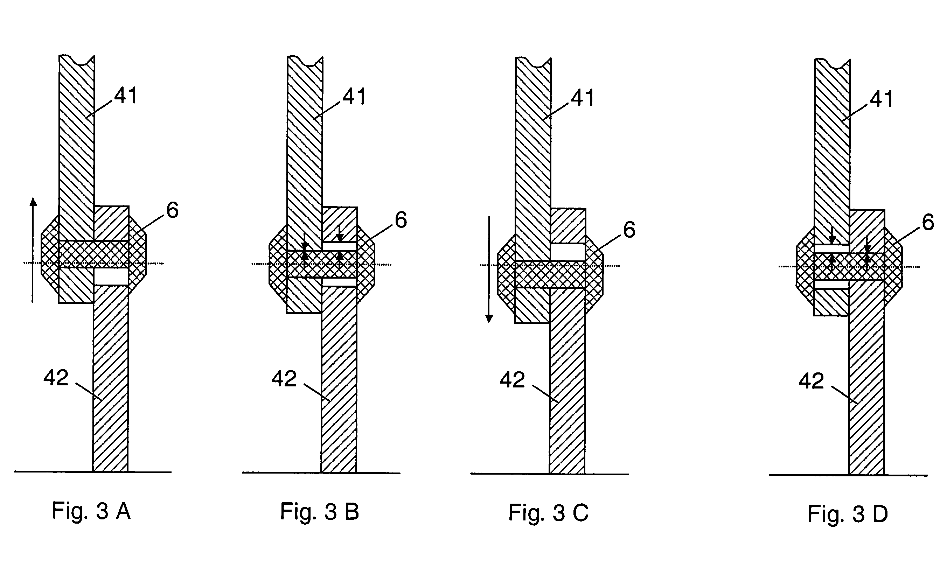

Fig. 3 zeigt die grundsätzliche Funktionsweise der einfachsten Ausführungsform der erfindungsgemässen Pendelstütze. Diese umfasst zwei relativ zueinander verschiebbare Teile 41 und 42, wobei in diesem Fall 41 das mit dem Gehäuse des Abgasturboladers verbundene, obere Teil der Pendelstütze und 42 das mit dem Untergrund verbundene untere Teil ist. Die beiden in Stützrichtung relativ zueinander verschiebbaren Teile sind über ein Befestigungsstück 6 miteinander verbunden. Hierfür sind in beide Teile Bohrungen eingelassen, in denen das Befestigungsstück angeordnet ist. Eine der beiden Bohrungen, im Falle der Fig. 3 A bis C die Bohrung im unteren Teil 42 (mittels der kleinen Pfeile in den Darstellungen verdeutlicht) und im Falle der Fig. 3 D die Bohrung im oberen Teil 41, weist in Stützrichtung bezüglich dem Befestigungsstück ein Spiel auf, so dass sich das jeweilige Teil der Pendelstütze bezüglich dem Befestigungsstück und dem anderen Teil der Pendelstütze in Stützrichtung bewegen lässt.

Über die Ausgestaltung der mit Spiel gegenüber dem Befestigungsstück ausgestatteten Bohrung kann die mögliche relative Verschiebbarkeit der Teile der Pendelstütze festgelegt werden. Ist diese Bohrung als in Stützrichtung ausgerichtetes Langloch ausgebildet, lässt sich die Pendelstütze nur in Stützrichtung dehnen bzw. stauchen. Durch Änderung der Ausrichtung des Langlochs, bzw. durch generellere Änderung der Form des Lochs kann die Richtung der Verschiebbarkeit geändert werden. Eine kreisförmige Bohrung würde beispielsweise eine gewisse, thermisch bedingte Taumelbewegung des über die Pendelstütze abgestützten Gehäuseteils zulassen.

Um die in Stützrichtung benötigte Stützkraft über den gesamten, von der Stellung gemäss der Fig. 3 A bis zur Stellung gemäss der Fig. 3 C reichenden Bewegungsbereicht zu gewährleisten, kann mittels der variierbaren Klemmwirkung des Befestigungsstücks die Normalkraft auf die beiden Pendelstützenteile eingestellt werden. Durch die Reibung der beiden Teile aneinander wird bei genügend grosser Normalkraft keine Verschiebung stattfinden. Erst wenn die Kraft in Stützrichtung einen Grenzwert übersteigt, kommt es zu einer Verschiebung. Die bei Änderung der Temperatur im Turbinenbereich verursachten Deformationen des Gehäuses des Abgasturboladers wirken mit einer grossen Kraft auf die Pendelstütze. Diese kann jedoch der den reibungsbedingten Grenzwert übersteigenden Kraft nachgeben und ihre Länge entsprechend anpassen. Im thermisch stationären Betrieb, bei gleichbleibend hoher oder tiefer Temperatur reichen die durch den normalen Betrieb des Abgasturboladers verursachten Kräfte nicht aus, um die beiden Teile der Pendelstütze relativ gegeneinander zu bewegen. In diesem Betriebszustand verhält sich die erfindungsgemässe Pendelstütze somit wie eine herkömmliche Pendelstütze.

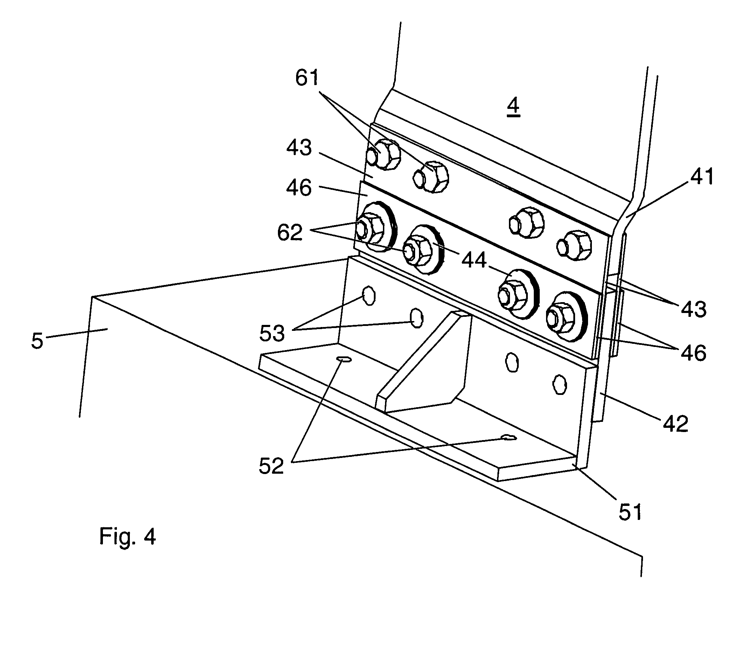

Fig. 4 zeigt eine Nahaufnahme einer weiteren Ausführungsform der erfindungsgemässen Pendelstütze, in der auch nochmals die Untergrundbefestigung 51 mitsamt den Befestigungsmitteln 52 und 53 detailliert dargestellt ist. Die beiden Teile 41 und 42 der Pendelstütze sind dabei nicht direkt sondern über zwei weitere Teile der Pendelstütze, die Verbindungselemente 43, miteinander verbunden. Diese Verbindungselemente sind mit dem oberen Teil der Pendelstütze 41 über die Befestigungsmittel 61 starr verbunden. Die Relativbewegung zwischen den beiden Teilen 41 und 43 wird somit über die Verbindung zwischen den Verbindungselementen 43 und dem unteren Teil 42 ermöglicht. Um das Gleitverhalten der direkt miteinander in Berührung stehenden Teile 42 und 43 bestimmt zu definieren, ist zwischen dem Befestigungsmittel 62, in Form eines Schraubenkopfes (auf der Rückseite) und einer entsprechenden Mutter, und dem Verbindungselement 43 ein Gleitblech 46 angeordnet. Auf diese Weise wird das Gleitverhalten nicht durch einen nicht definierbaren, allenfalls erhöhten Reibungswiderstand des Befestigungsmittels auf dem gleitenden Teil beeinflusst. Die auf die aneinander reibenden Teile wirkende Normalkraft wird vorzugsweise mittels einer vorgespannten Tellerfeder-Verbindung erzeugt. Ein entsprechendes Federelement 44, mit einer oder mehreren Tellerfedern, wird hierfür zwischen Befestigungsmittel und Verbindungselement geklemmt. Der Vorteil der Tellerfedern liegt in ihren flachen Kennlinien, d.h. praktisch gleichbleibende Federkraft bei variierender Komprimierung. Die erzeugte Federkraft kann dadurch einerseits praktisch unabhängig von den Herstellungstoleranzen der in der Verbindung zusammenwirkenden Teile eingestellt werden. Andererseits kann die Federkraft aber auch im Langzeitbetrieb konstant gehalten werden, trotz reibungsbedingter Abnützung der Teile und der damit verbundenen nachlassenden Kraft der Befestigungsmittel.

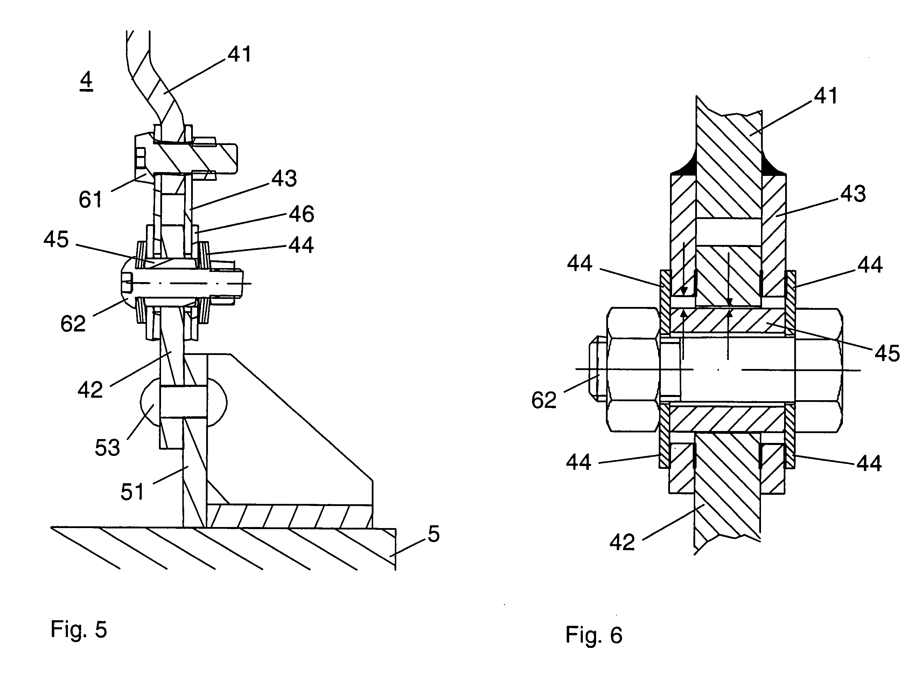

Fig. 5 zeigt die Ausführungsform gemäss Fig. 4 im Querschnitt. Dabei wird noch einmal verdeutlicht, wie die beiden Teile der Pendelstütze 41 und 42 über die Verbindungselemente 43 miteinander verbunden sind. Die drei Tellerfedern 44 jeweils ausserhalb der Gleitbleche 46 sorgen für den gleichmässigen Anpressdruck. Damit dieser trotz Federelement nicht doch zu gross wird, kann ein Klemmbegrenzer vorgesehen sein, beispielsweise in der Form einer über den Schaft des Befestigungsmittels 62 geschobenen Zwischenbüchse 45. Der Klemmbegrenzer sorgt dafür, dass die Befestigungsmittel die Verbindung nicht zu stark zusammenklemmt, und so die Reibverbindungen eine maximale Normalkraft erfahren. Auf diese Weise können die Tellerfedern beispielsweise mittels handelsüblicher Schrauben unabhängig vom Anzugsmoment immer um denselben Betrag vorgespannt werden, indem die Tellerfeder bis zum Anschlag an den Klemmbegrenzer festgeschraubt werden, jedoch nicht weiter.

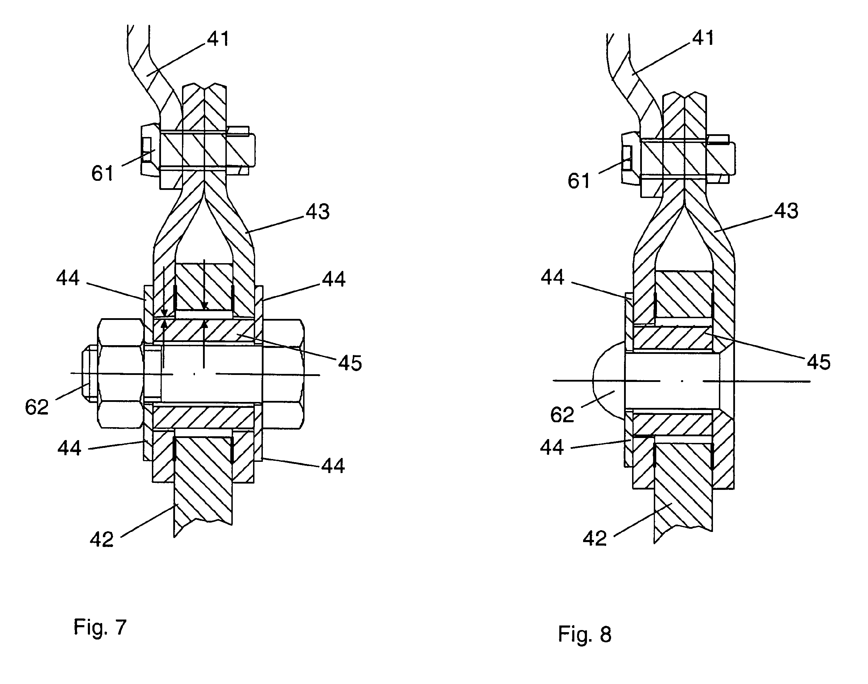

Fig. 6 und Fig. 7 zeigen zwei unterschiedliche Möglichkeiten, wie die Verbindungselemente 43 mit dem oberen Teil der Pendelstütze verbunden werden können. Bei der geschweissten Ausführungsform gemäss Fig. 6 sind die Verbindungselemente ein nicht lösbarer Bestandteil der Pendelstütze, während bei der Ausführungsform gemäss Fig. 7 die Schraubenbefestigung lösbar ausgeführt sind und somit auch die Verbindungselemente von der Pendelstütze gelöst werden können.

Abgesehen von der unterschiedlichen Befestigung und geometrischen Ausgestaltung der Verbindungselemente verdeutlichen Fig. 6 und Fig. 7 noch einmal den bereits anhand der Fig. 3 erklärten Unterschied bezüglich des Spiels zwischen dem Befestigungselement und einem der verschiebbaren Teil. Das Spiel wird, wie bereits im Text zur Fig. 3 erläutert, über die Form und Abmessung der Öffnung für die Befestigungsmittel bestimmt.

In der Ausführungsform nach Fig. 6 ist das Spiel zwischen dem Schaft des Befestigungselements 62 und den äusseren Verbindungselementen 43 vorhanden (siehe Pfeile). Dadurch verschieben sich die Verbindungselemente 43 relativ zum Befestigungselement und zum spiellos mit dem Befestigungselement verbundenen unteren Teil 42 der Pfeilstütze. Die zwischen den Tellerfedern angeordnete Zwischenbüchse 45 ist hierbei als Teil des Befestigungselements zu betrachten und verschiebt sich dementsprechend nicht. Diese Ausführungsform hat vier aneinander reibende Gleitflächen, jeweils zwei zwischen Tellerfeder 44 und Verbindungselement 43 und zwei zwischen Verbindungselement 43 und unterem Teil 42 der Pendelstütze.

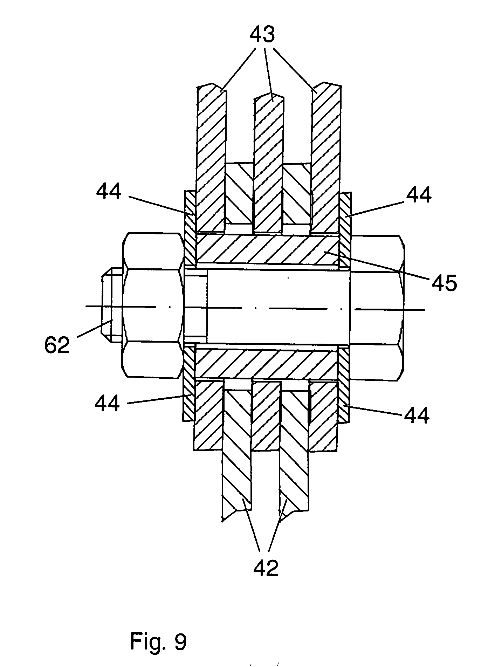

In der Ausführungsform nach Fig. 7 ist das Spiel zwischen dem Schaft des Befestigungselements 62 und dem inneren Teil der Pendelstütze 42 vorhanden (siehe Pfeile). Dadurch verschieben sich die äusseren Verbindungselemente 43 mit dem Befestigungselement relativ zum unteren Teil 42 der Pfeilstütze. Die zwischen den Tellerfedern angeordnete Zwischenbüchse 45 ist wiederum als Teil des Befestigungselements zu betrachten und verschiebt sich entsprechend mit dem Befestigungselement. Diese Ausführungsform hat nur zwei aneinander reibende Gleitflächen, zwischen Verbindungselement 43 und unterem Teil 42 der Pendelstütze. Um mit der Ausführungsform nach Fig. 7 ebenfalls zu vier Gleitflächen zu gelangen, kann gemäss der Ausführungsform nach Fig. 9 ein zusätzliches Verbindungsstück 43 vorgesehen sein, welches dann zusätzlich zwischen dem nunmehr zweiteiligen unteren Teil 42 der Pendelstütze eingeklemmt wird.

Die Ausführungsform nach Fig. 8 entsprich weitgehend der Ausführungsform gemäss Fig. 7, jedoch verfügt diese Verbindung nur über ein Federelement 44, während auf der gegenüberliegenden Seite das Befestigungsmittel direkt mit dem Verbindungselement formschlüssig verbunden ist.

Über die Anzahl der Reibungsverbindungen kann die gesamte Reibkraft der Pendelstützenverbindung gesteuert werden. Andererseits kann bei einer vorgegebenen Gesamtreibkraft durch die Erhöhung der Anzahl der Reibungsverbindungen die Feder- bzw. Anpresskraft der einzelnen Verbindungen reduziert werden. Dies und gegebenenfalls das zusätzliche Aufbringen spezieller Verschleissschutz- bzw. Gleitschichten im Bereich der aufeinander reibenden Flächen reduziert die Verschleiss- bzw. Anfressgefahr der Teile der Pendelstütze.

### Bezugszeichenliste

- 1: Verdichtergehäuse
- 11: Luftansauggehäuse
- 12: Luftaustritt
- 2: Turbinengehäuse
- 21: Abgaseintritt
- 22: Abgasaustritt
- 3: Lagergehäuse
- 31: Lagergehäusefuss
- 4: Pendelstütze
- 41, 42: Relativ zueinander verschiebbare Teile der Pendelstütze
- 43: Verbindungselemente
- 44: Federelemente, Tellerfedern
- 45: Zwischenbüchse, Klemmbegrenzer
- 46: Gleitblech
- 5: Montageuntergrund
- 51: Untergrundbefestigung
- 52, 53: Befestigungsmittel
- 6, 61, 62: Befestigungsmittel

## Patentansprüche

1. Stütze (4) zum Abstützen eines Abgasturboladers auf einem Untergrund, **dadurch gekennzeichnet, dass** die Stütze zwei- oder mehrteilig ausgebildet ist, und dass ein erstes Teil der Stütze (41) und ein zweites Teil der Stütze (42) derart miteinander verbunden sind, dass sie zum Ändern der Länge der Stütze in Stützrichtung relativ zueinander bewegbar sind.

2. Stütze nach Anspruch 1, **dadurch gekennzeichnet, dass** die relativ zueinander bewegbaren Teile der Stütze (41, 42) derart miteinander verbunden sind, dass sie erst ab Überschreiten eines Grenzwertes einer in Stützrichtung auf die Stütze wirkenden Kraft bewegbar sind.

3. Stütze nach Anspruch 2, **dadurch gekennzeichnet, dass** der Grenzwert durch die Art und Stärke der Verbindung der relativ zueinander bewegbaren Teile der Stütze (41, 42) festlegbar ist.

4. Stütze nach Anspruch 1, **dadurch gekennzeichnet, dass** mindestens das erste Teil der Stütze (41) im Verbindungsbereich aus mehreren Verbindungselementen (43) besteht.

5. Stütze nach Anspruch 4, **dadurch gekennzeichnet, dass** das zweite Teil der Stütze (42) und die mehreren Verbindungselemente (43) im Verbindungsbereich mittels einer Klemmverbindung miteinander verbunden sind.

6. Stütze nach Anspruch 1, **dadurch gekennzeichnet, dass** die relativ zueinander bewegbaren Teile der Stütze (41, 42) mittels einer Klemmverbindung miteinander verbunden sind.

7. Stütze nach einem der Ansprüche 5 oder 6, **dadurch gekennzeichnet, dass** die Klemmverbindung Federelemente (44) umfasst, welche die miteinander verbundenen Teile (41, 42, 43) zusammenklemmen.

8. Stütze nach einem der Ansprüche 5 bis 7, **dadurch gekennzeichnet, dass** die Klemmverbindung Mittel (45) zum Begrenzen der Klemmung der Klemmverbindung in Pressrichtung umfasst.

9. Stütze nach einem der Ansprüche 5 bis 8, **dadurch gekennzeichnet, dass** die zusammengeklemmten Teile im Bereich der Klemmverbindung mindestens teilweise eine Beschichtung aufweisen.

10. Abgasturbolader mit einem Verdichter- (1), einem Turbinen- (2) und einem Lagergehäuse (3), wobei der Abgasturbolader im Bereich des Lagergehäuses mittels einer ersten Stütze (31) und im Bereich des Turbinengehäuses mittels einer zweiten Stütze (4) auf einem Untergrund (5) abgestützt ist,
**dadurch gekennzeichnet, dass**
die zweite Stütze gemäss einem der Ansprüche 1 bis 9 ausgebildet ist.
